**Europäisches Patentamt**

**European Patent Office**

**Office européen des brevets**

(11) Veröffentlichungsnummer: **0 007 493**
**B1**

(12) **EUROPÄISCHE PATENTSCHRIFT**

(45) Veröffentlichungstag der Patentschrift:
06.01.82

(51) Int. Cl.³: **C 01 B 25/163**

(21) Anmeldenummer: **79102301.3**

(22) Anmeldetag: **06.07.79**

(54) Verfahren zur Herstellung von phosphoriger Säure.

(30) Priorität: **29.07.78 DE 2833380**

(43) Veröffentlichungstag der Anmeldung:
**06.02.80 Patentblatt 80/3**

(45) Bekanntmachung des Hinweises auf die Patenterteilung:
**06.01.82 Patentblatt 82/1**

(84) Benannte Vertragsstaaten:
**BE CH DE FR GB IT NL**

(56) Entgegenhaltungen:
**DE-C-442 210**
**FR-A-737 080**
**US-A-2 843 457**

(73) Patentinhaber: **HOECHST AKTIENGESELLSCHAFT,
Postfach 80 03 20, D-6230 Frankfurt/Main 80 (DE)**

(72) Erfinder: **Jödden, Klaus, Dr., Alleestrasse 44,
D-5030 Hürth (DE)**
Erfinder: **Stephan, Hans-Werner, Ölbergstrasse 77,
D-5000 Köln 41 (DE)**
Erfinder: **Heymer, Gero, Dr., Fasanenaue 12,
D-5042 Erftstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren zur Herstellung von phosphoriger Säure

Die vorliegende Erfindung betrifft ein Verfahren zur Herstellung wäßriger Lösungen von phosphoriger Säure durch Zugabe von Chlorwasserstoff zu wäßrigen Natriumphosphitlösungen.

Bei der kontinuierlichen Herstellung von Phosphorwasserstoff durch Disproportionierung von weißem Phosphor mit Natronlauge fallen zwangsweise erhebliche Mengen von wäßrigen Natriumphosphitlösungen an, die meist noch geringe Anteile Natriumhypophosphit enthalten. Der Gesamt-Phosphorgehalt solcher Lösungen schwankt zwischen 1 und 12 Gewichts-%, wobei das $\frac{P^{1+}}{P^{3+}}$-Verhältnis etwa 0,1 bis 0,3 beträgt.

Aus Kosten- und Umweltschutzgründen müssen diese Abfallösungen aufgearbeitet werden. Von den Phosphit-Salzen hat nur das basische Bleiphosphit, das als Stabilisator für PVC eingesetzt wird, Bedeutung. Ferner besteht grundsätzlich die Möglichkeit, Phosphit-Hypophosphit-Lösungen durch Aufsprühen auf Rohphosphat zur Gewinnung von elementarem Phosphor zu nutzen. Außerdem ist es bekannt, daß Phosphite pyrolytisch in Phosphate umgewandelt werden können.

Der Nachteil dieser Verfahren besteht darin, daß relativ teure niederwertige Phosphorverbindungen in wirtschaftlich weniger wertvolle Phosphate umgewandelt oder sogar lediglich in Verbindung mit Rohphosphat verwertet werden.

Aufgabe der vorliegenden Erfindung war es, die genannten Abfallösungen in nutzbringender Weise zu verwenden, unter Erhaltung der dreiwertigen Oxidationsstufe des darin enthaltenen Phosphors.

Überraschenderweise wurde gefunden, daß sich diese Aufgabe lösen läßt, wenn man in die Natriumphosphitlösungen Chlorwasserstoff bis zur Sättigung einleitet und das dabei ausfallende Natriumchlorid von der entstandenen salzsauren Lösung von phosphoriger Säure abtrennt.

Zwar ist es allgemein bekannt, daß man durch Zugabe einer starken Mineralsäure zu einer Salzlösung von schwächeren Säuren diese schwächeren Säuren aus ihrem Salz in Freiheit setzen kann, doch war es im vorliegenden Falle nicht vorhersehbar, daß man durch Sättigung der Natriumphosphitlösungen mit Chlorwasserstoff das Natrium praktisch quantitativ als Natriumchlorid ausfällen und abtrennen kann, denn ausgehend von den entsprechenden Kaliumverbindungen ist dies nicht möglich. Desgleichen lassen sich die erfindungsgemäßen Ergebnisse auch nicht erzielen, wenn anstelle von Chlorwasserstoff ein anderer Halogenwasserstoff wie beispielsweise Bromwasserstoff, eingesetzt wird.

Aus der erfindungsgemäß erhaltenen salzsauren Phosphorigsäurelösung kann anschließend in bekannter Weise durch Eindampfen und Strippen einer phosphorigen Säure gewonnen werden. Besonders vorteilhaft ist es jedoch, diese Lösung im Rahmen der Gewinnung von $H_3PO_3$ aus $PCl_3$ als Hydrolysewasser in den Prozeß einzuspeisen.

Insbesondere lassen sich solche Natriumphosphitlösungen verwenden, die 1 bis 12 Gewichts-%, vorzugsweise 7 bis 10 Gewichts-%, P und 1 bis 50 Gewichts-%, vorzugsweise 15 bis 25 Gewichts-%, Natrium, berechnet als Natriumhydroxid, enthalten.

Es empfiehlt sich, die Sättigung der Natriumphosphitlösung mit Chlorwasserstoff bei Raumtemperatur durchzuführen. Enthalten die eingesetzten Natriumphosphitlösungen Hypophosphite und stören letztere bei der Weiterverwendung der erhaltenen Lösungen von phosphoriger Säure, so ist es ratsam, vor dem Einleiten des Chlorwasserstoffs bei erhöhter Temperatur, vorzugsweise bei Siedehitze, ein freien Sauerstoff enthaltendes Gas, wie Luft oder Sauerstoff, durch die Natriumphosphitlösung hindurchzuleiten.

Es ist bekannt, daß Hypophosphit in der Wärme mittels katalytisch wirksamer Metalle wie Platin, Palladium, Kupfer und Raney-Nickel unter Wasserstoffentwicklung in wäßriger Lösung zum Phosphit oxidiert werden kann. Nachteilig bei diesem Verfahren ist das Vorliegen einer festen Phase, die einen zusätzlichen Filtrationsschritt erforderlich macht und eine kontinuierliche Fahrweise erschwert.

Es wurde nun gefunden, daß die Oxidation des in geringer Konzentration in den Natriumphosphitlösungen vorliegenden Hypophosphits zum Phosphit in der Siedehitze lediglich mit Luft oder Sauerstoff möglich ist, ohne daß eine Weiteroxidation zum Phosphat erfolgt. Aus der so behandelten Lösung kann sofort nach dem erfindungsgemäßen Verfahren eine Phosphorigsäure-Lösung hergestellt werden.

Abgesehen davon, daß, wie oben bereits erwähnt, die erhaltenen Lösungen von phosphoriger Säure zur Hydrolyse von $PCl_3$ verwendet werden können, ist ein weiterer Vorteil der vorliegenden Erfindung darin zu sehen, daß der bei der $PCl_3$-Hydrolyse als Abfallprodukt anfallende Chlorwasserstoff zur Umwandlung der Natriumphosphitlösungen in Phosphorigsäure-Lösungen verwendet werden kann. Die vorliegende Erfindung ermöglicht also eine Kapazitätserhöhung bei der Herstellung von phosphoriger Säure, ohne daß gleichzeitig der Chloridanfall insgesamt erhöht wird. Ein weiterer Vorteil besteht darin, daß die Natriumphosphit-Abfallösung in die als Zwischenprodukt im Vergleich zu Phosphaten wertvollere phosphorige Säure umgewandelt wird, wobei der Natriumgehalt der erhaltenen Lösungen von phosphoriger Säure überraschend gering ist, was eine vielseitige Anwendung dieser Lösungen ermöglicht.

### Beispiel 1

500 ml Natriumphosphitlösung, die 0,7 Gewichts-% P in Form von Hypophosphit, 7,4 Gewichts-% P in Form von Phosphit und 0,1 Gewichts-% P in Form von Phosphaten enthielten, wurden 2 Stunden unter Lufteinleiten zum Sieden erhitzt. Hiernach war der Hypophosphit-Gehalt auf <0,1 Gewichts-% gesunken.

Die so erhaltene Natriumphosphitlösung wurde zur Auflösung ausgefallener Salze bis zur ursprünglichen Konzentration verdünnt und durch einen Tropftrichter im Verlauf einer Stunde in einen mit Raschigringen gefüllten Waschturm mit Kühlmantel eingespeist, der im Gegenstrom mit Chlorwasserstoff (250 l/h) beschickt wurde. Der ausgefallene Kochsalzbrei füllte ein Zwischengefäß mit Filtertuchboden und ließ sich unter leichtem Unterdruck filtrieren. Ein Teil des klaren Filtrats wurde kontinuierlich in den Waschturm umgepumpt, um den NaCl-Brei mechanisch herunterzuspülen. Nach Ausbildung einer einige cm hohen NaCl-Schicht auf dem Filtertuch wurde das Kochsalz durch Wasser vom Filter gelöst.

$H_3PO_3$-Gehalt des Filtrats:
   22,8 Gewichts-%
$Na_2O$-Gehalt:
   0,029 Gewichts-% entsprechend 940 ppm, bez. auf $H_3PO_3$.

Das Filtrat konnte ohne Schwierigkeiten zur Hydrolyse von $PCl_3$ eingesetzt werden.

### Beispiel 2

In 500 g Natriumphosphitlösung mit 9,3 Gewichts-% Gesamt-Phosphor und 17,3% $Na_2O$ wurde bei Raumtemperatur unter Kühlung Chlorwasserstoff eingeleitet (40 l/h). Nach Sättigung und Abtrennung von 176 g Kochsalz wurde eine Lösung mit 22,4 Gewichts-% $H_3PO_3$ und 0,038 Gewichts-% $Na_2O$ erhalten.

### Patentansprüche

1. Verfahren zur Herstellung wäßriger Lösungen von phosphoriger Säure durch Zugabe von Chlorwasserstoff zu wäßrigen Natriumphosphitlösungen, dadurch gekennzeichnet, daß man zur Herstellung von praktisch natriumfreien salzsauren Lösungen von phosphoriger Säure in die Natriumphosphitlösung den Chlorwasserstoff bis zur Sättigung einleitet und das dabei ausfallende Natriumchlorid von der entstandenen salzsauren Lösung von phosphoriger Säure abtrennt.

2. Verfahren nach Anspruch 1, dadurch gekennzeichnet, daß man Natriumphosphitlösungen einsetzt, die 1 bis 12 Gew.-% P enthalten.

3. Verfahren nach Anspruch 2, dadurch gekennzeichnet, daß man Natriumphosphitlösungen einsetzt, die 7 bis 10 Gew.-% P enthalten.

4. Verfahren nach einem der Ansprüche 1 bis 3, dadurch gekennzeichnet, daß die Sättigung der Natriumphosphitlösung mit Chlorwasserstoff bei Raumtemperatur durchgeführt wird.

5. Verfahren nach einem der Ansprüche 1 bis 4, dadurch gekennzeichnet, daß man durch hypophosphithaltige Natriumphosphitlösungen vor dem Einleiten des Chlorwasserstoffs bei erhöhten Temperaturen ein freien Sauerstoff enthaltendes Gas hindurchleitet.

6. Verfahren nach einem der Ansprüche 1 bis 5, dadurch gekennzeichnet, daß man Natriumphosphitlösungen einsetzt, die 1 bis 50 Gew.-% Natrium, berechnet als Natriumhydroxid, enthalten.

7. Verfahren nach Anspruch 6, dadurch gekennzeichnet, daß man Natriumphosphitlösungen einsetzt, die 15 bis 25 Gew.-% Natrium, berechnet als Natriumhydroxid, enthalten.

### Claims

1. Process for making aqueous phosphorous acid solutions by introducing hydrogen chloride into aqueous sodium phosphite solutions characterized in that the hydrogen chloride is introduced into the sodium phosphite solution until the latter is saturated therewith and precipitating sodium chloride is separated from the resulting phosphorous acid solution in hydrochloric acid, so as to obtain phosphorous acid solutions in hydrochloric acid which are practically free from sodium.

2. Process as claimed in claim 1, wherein the sodium phosphite solutions contain 1 to 12 weight % of phosphorus.

3. Process as claimed in claim 2, wherein the sodium phosphite solutions contain 7 to 10 weight % of phosphorus.

4. Process as claimed in any of claims 1 to 3, wherein the sodium phosphite solution is saturated with hydrogen chloride at room temperature.

5. Process as claimed in any of claims 1 to 4, wherein a gas containing free oxygen is passed at elevated temperature through the hypophosphite-containing sodium phosphite solution, prior to introducing hydrogen chloride thereinto.

6. Process as claimed in any of claims 1 to 5, wherein the sodium phosphite solutions contain 1 to 50 weight % of sodium, calculated as sodium hydroxide.

7. Process as claimed in claim 6, wherein the sodium phosphite solutions contain 15 to 25 weight % of sodium, calculated as sodium hydroxide.

### Revendications

1. Procédé de préparation de solutions aqueuses d'acide phosphoreux par addition d'acide chlorhydrique à des solutions aqueuses de phosphite de sodium, caractérisé en ce que, pour la préparation de solutions chlorhydriques d'acide phosphoreux pratiquement exemptes de sodium, l'on introduit l'acide chlorhydrique dans les solutions de phosphite de sodium jusqu'à saturation et on sépare ensuite de la solution chlorhydrique d'acide phosphoreux le chlorure de sodium qui a précipité.

2. Procédé selon la revendication 1, caractérisé en ce que l'on utilise des solutions de phosphite de sodium contenant 1 à 12% en poids de phosphore.

3. Procédé selon la revendication 2, caractérisé en ce que l'on utilise des solutions de phosphite de sodium contenant 7 à 10% en poids de phosphore.

4. Procédé selon l'une quelconque des revendications 1 à 3, caractérisé en ce que l'on effectue la saturation de la solution de phosphite de sodium par l'acide chlorhydrique à la température ambiante.

5. Procédé selon l'une quelconque des revendications 1 à 4, caractérisé en ce que, avant introduction de l'acide chlorhydrique, on fait passer dans la solution de phosphite de sodium contenant de l'hypophosphite un gaz contenant de l'oxygène libre à température élevée.

6. Procédé selon l'une quelconque des revendications 1 à 5, caractérisé en ce que l'on utilise des solutions de phosphite de sodium contenant 1 à 50% en poids de sodium, calculé en hydroxyde de sodium.

7. Procédé selon la revendication 6, caractérisé en ce que l'on utilise des solutions de phosphite de sodium contenant 15 à 25% en poids de sodium, calculé en hydroxyde de sodium.